# EUROPÄISCHE PATENTSCHRIFT

(11) **EP 3 437 821 B1**
(45) Veröffentlichungstag und Bekanntmachung des Hinweises auf die Patenterteilung: **30.12.2020**
(21) Anmeldenummer: 18184014.1
(22) Anmeldetag: 17.07.2018
(51) Int. Cl.: B29C 45/16, B29C 45/27, B29C 45/28, B29K 69/00, B29K 21/00, B29K 233/04

(54) **VORRICHTUNG ZUR HERSTELLUNG EINES EINE HAUTKOMPONENTE UND EINE KERNKOMPONENTE UMFASSENDEN KUNSTSTOFFBAUTEILS**
DEVICE FOR PRODUCING A PLASTIC COMPONENT COMPRISING A SKIN COMPONENT AND A CORE COMPONENT
DISPOSITIF DE FABRICATION D'UN COMPOSANT EN MATIÈRE PLASTIQUE COMPORTANT UN COMPOSANT D'ENVELOPPE ET UN COMPOSANT CENTRAL

(30) Priorität: 01.08.2017 DE 102017117444
(43) Veröffentlichungstag der Anmeldung: 06.02.2019
(73) Patentinhaber: Werkzeugbau Siegfried Hofmann GmbH, 96215 Lichtenfels (DE)
(72) Erfinder: Beck, Jonas, 96050 Bamberg (DE); Popp, Andreas, 91257 Pegnitz (DE)
(74) Vertreter: Hafner & Kohl PartmbB

(56) Entgegenhaltungen:
- WO-A1-03/031142
- JP-A- H0 952 256

## Beschreibung

Die Erfindung betrifft eine Vorrichtung zur Herstellung eines eine durch ein erstes Kunststoffmaterial gebildete Hautkomponente sowie eine durch ein zweites Kunststoffmaterial gebildete, von der Hautkomponente umgebene Kernkomponente umfassenden Kunststoffbauteils, insbesondere eines Koinjektionsbauteils.

Vorrichtungen zur Herstellung entsprechender Kunststoffbauteile, d. h. insbesondere entsprechender Koinjektionsbauteile, sind aus dem Stand der Technik an und für sich bekannt.

Entsprechende Vorrichtungen umfassen typischerweise ein eine formgebende Werkzeugkavität umfassendes Spritzgießwerkzeug und wenigstens zwei an das Spritzgießwerkzeug andockbare Spritzaggregate, über welche wenigstens zwei, typischerweise, z. B. chemisch, unterschiedliche schmelzeförmige Kunststoffmaterialien in die formgebende Werkzeugkavität des Spritzgießwerkzeugs einspritzbar sind. Ein über ein erstes Spritzaggregat in die Werkzeugkavität einspritzbares bzw. eingespritztes erstes schmelzeförmiges Kunststoffmaterial bildet eine Hautkomponente des herzustellenden Kunststoffbauteils, ein über ein weiteres Spritzaggregat in die Werkzeugkavität einspritzbares bzw. eingespritztes weiteres schmelzeförmiges Kunststoffmaterial bildet eine von der Hautkomponente umgebene bzw. umschlossene Kernkomponente des herzustellenden Kunststoffbauteils.

Die Ausbildung entsprechender Kunststoffbauteile stellt regelmäßig eine werkzeugtechnische Herausforderung dar. Das Spritzgießwerkzeug muss so konzipiert sein, dass ein erwünschtes Fließen der schmelzeförmigen Kunststoffmaterialien in die Werkzeugkavität mit der Maßgabe, dass das die Hautkomponente bildende Kunststoffmaterial das die Kernkomponente bildende Kunststoffmaterial vollständig umschließt, in reproduzierbarer Weise gewährleistet ist. Dies gilt insbesondere für Vorrichtungen zur Herstellung von Koinjektionsbauteilen, d. h. für Vorrichtungen zur Durchführung von Koinjektionsspritzgießverfahren, bei welchen wenigstens zwei schmelzeförmige Kunststoffmaterialien zumindest zeitweise gleichzeitig in die Werkzeugkavität eines Spritzgießwerkzeugs eingespritzt werden.

WO 03/031142 A1 offenbart ein Spritzgießwerkzeug mit einem Schmelzeverteiler mit zwei Kaltkanälen und zwei Heißkanälen.

Der Erfindung liegt die Aufgabe zugrunde, eine verbesserte Vorrichtung zur Herstellung eines eine durch ein erstes Kunststoffmaterial gebildete Hautkomponente sowie eine durch ein zweites Kunststoffmaterial gebildete, von der Hautkomponente umgebene Kernkomponente umfassenden Kunststoffbauteils, insbesondere eines Koinjektionsbauteils, anzugeben.

Die Aufgabe wird durch eine Vorrichtung gemäß Anspruch 1 gelöst. Die hierzu abhängigen Ansprüche betreffen mögliche Ausführungsformen der Vorrichtung.

Die hierin beschriebene Vorrichtung ist zur Herstellung von eine durch ein erstes, insbesondere thermo- oder duroplastisches, Kunststoffmaterial gebildete Hautkomponente sowie eine durch ein zweites, insbesondere thermo- oder duroplastisches, Kunststoffmaterial gebildete, von der Hautkomponente umgebene bzw. umschlossene Kernkomponente umfassenden Kunststoffbauteilen, insbesondere von Koinjektionsbauteilen, eingerichtet. Die Vorrichtung kann sonach insbesondere als Koinjektionsspritzgießvorrichtung, d. h. als eine Vorrichtung zur Durchführung von Koinjektionsspritzgießverfahren, bei welchen wenigstens zwei schmelzeförmige Kunststoffmaterialien (Kunststoffschmelzen) in eine formgebende Werkzeugkavität eines Spritzgießwerkzeugs eingespritzt werden, ausgebildet sein.

Die Vorrichtung umfasst ein wenigstens zwei Werkzeugelemente (Werkzeughälften) umfassendes Spritzgießwerkzeug. Wenigstens ein erstes Werkzeugelement ist relativ zu wenigstens einem weiteren bzw. zweiten Werkzeugelement zwischen wenigstens zwei mit einer Offen- und einer Schließstellung des Spritzgießwerkzeugs korrelierten Betriebspositionen bewegbar gelagert. Das Spritzgießwerkzeug ist demnach durch entsprechende Relativbewegungen der Werkzeugelemente in eine Offenstellung und in eine Schließstellung überführbar. Die wenigstens zwei Werkzeugelemente sind jeweils mit einer formgebenden Werkzeugoberfläche bzw. -kontur ausgebildet. Über die wenigstens zwei Werkzeugelemente, d. h. insbesondere über die an diesen jeweils ausgebildeten formgebenden Werkzeugoberflächen bzw. - konturen, ist in der Schließstellung des Spritzgießwerkzeugs eine geschlossene formgebende Werkzeugkavität des Spritzgießwerkzeugs ausbildbar bzw. ausgebildet. Im Betrieb der Vorrichtung werden die das jeweilige mit der Vorrichtung herzustellende Kunststoffbauteil bildenden Kunststoffmaterialien in die formgebende Werkzeugkavität eingespritzt.

An das Spritzgießwerkzeug sind wenigstens zwei Spritzaggregate andockbar. Jeweilige Spritzaggregate umfassten typischerweise ein in einem Förderraum bewegbares, insbesondere schneckenartiges, Fördermittel, über welches sich ein schmelzeförmiges Kunststoffmaterial fördern lässt. Über die jeweiligen Spritzaggregate lassen sich die das mit der Vorrichtung herzustellende Kunststoffbauteil bildenden Kunststoffmaterialien bereitstellen. Ein erstes Spritzaggregat stellt das die Hautkomponente des herzustellenden Kunststoffbauteils bildende erste Kunststoffmaterial (erste Kunststoffschmelze) bereit, ein zweites Spritzaggregat stellt das die Kernkomponente des herzustellenden Kunststoffbauteils bildende zweite Kunststoffmaterial (zweite Kunststoffschmelze) bereit. Die Spritzaggregate können einen Bestandteil der Vorrichtung bzw. einer der Vorrichtung zugeordneten Spritzgießeinrichtung, insbesondere Mehrkomponentenspritzgießeinrichtung, bilden.

Die Vorrichtung umfasst eine Kaltkanalstruktur. Die Kaltkanalstruktur kann in einem Werkzeugelement des Spritzgießwerkzeugs angeordnet bzw. ausgebildet sein. Die Kaltkanalstruktur umfasst wenigstens einen von wenigstens einem schmelzeförmigen Kunststoffmaterial bzw. einer Kunststoffschmelze durchströmbaren Kaltkanal. Der Kaltkanal mündet zumindest in der Schließstellung des Spritzgießwerkzeugs (unmittelbar) in die Werkzeugkavität. Wie sich im Weiteren ergibt, wird der Kaltkanal zumindest abschnittsweise gleichzeitig von den das mit der Vorrichtung herzustellende Kunststoffbauteil bildenden schmelzeförmigen Kunststoffmaterialien durchströmt.

Die Vorrichtung umfasst ferner eine (erste) Heißkanalstruktur. Die (erste) Heißkanalstruktur kann in einem Werkzeugelement des Spritzgießwerkzeugs angeordnet bzw. ausgebildet sein. Die (erste) Heißkanalstruktur umfasst wenigstens einen von einem schmelzeförmigen Kunststoffmaterial, d. h. insbesondere dem zweiten Kunststoffmaterial zur Ausbildung der Kernkomponente des mit der Vorrichtung herzustellenden Kunststoffbauteils, durchströmbaren (ersten) Heißkanal. Der (erste) Heißkanal ist über geeignete spritzgießwerkzeugseitige Heizeinrichtungen, d. h. z. B. von einem Heizfluid durchströmbare, gegebenenfalls additiv bzw. generativ ausgebildete, Temperierkanäle, beheizbar bzw. durch geeignete spritzgießwerkzeugseitige thermische Isoliereinrichtungen thermisch isoliert.

Die von dem die Kernkomponente des herzustellenden Kunststoffbauteils bildenden schmelzeförmigen zweiten Kunststoffmaterial durchströmbaren Heißkanal umfassende Heißkanalstruktur ist typischerweise, insbesondere unmittelbar, mit wenigstens einem das schmelzeförmige zweite Kunststoffmaterial bereitstellenden (zweiten) Spritzaggregat verbindbar oder verbunden. Ein entsprechendes (zweites) Spritzaggregat lässt sich im Betrieb der Vorrichtung sonach an den Heißkanal bzw. die Heißkanalstruktur andocken, um ein schmelzeförmiges zweites Kunststoffmaterial in diese(n), weiter in den Kaltkanal und von diesem weiter in die Werkzeugkavität einzuspritzen.

Der Heißkanal mündet zumindest in der Schließstellung des Spritzgießwerkzeugs (unmittelbar) in den Kaltkanal. Dadurch, dass der Heißkanal in der Schließstellung des Spritzgießwerkzeugs unmittelbar in den Kaltkanal mündet, ist es auf äußerst praktikable Weise möglich, das schmelzeförmige zweite Kunststoffmaterial (Kernkomponente) in das Innere ("Seele") des den Kaltkanal bereits durchströmenden schmelzeförmigen ersten Kunststoffmaterials (Hautkomponente) einzubringen, sodass bereits in einem Abschnitt des Kaltkanals, d. h. insbesondere einem Endabschnitt bezüglich des in die Werkzeugkavität mündenden Mündungsbereichs des Kaltkanals, eine Anordnung des schmelzeförmigen ersten Kunststoffmaterials und des von dem schmelzeförmigen ersten Kunststoffmaterial umgebenen bzw. umschlossenen schmelzeförmigen zweiten Kunststoffmaterials auszubilden. Mit anderen Worten ist es dadurch, dass der Heißkanal in der Schließstellung des Spritzgießwerkzeugs unmittelbar in den Kaltkanal des Spritzgießwerkzeugs mündet, möglich, dass bereits in einem Abschnitt des Kaltkanals ein gleichzeitiges Strömen des die Hautkomponente des herzustellenden Kunststoffbauteils bildenden ersten Kunststoffmaterials und des die Kernkomponente des herzustellenden Kunststoffbauteils bildenden zweiten Kunststoffmaterials auszubilden, derart, dass das zweite Kunststoffmaterial von dem ersten Kunststoffmaterial umgeben bzw. umschlossen ist; das zweite Kunststoffmaterial strömt sonach innerhalb des durch den Kaltkanal in die Werkzeugkavität strömenden ersten Kunststoffmaterials in die Werkzeugkavität.

Die Vorrichtung umfasst ferner eine der Heißkanalstruktur zugeordnete Nadelverschlusseinrichtung. Die Nadelverschlusseinrichtung umfasst wenigstens ein Nadelverschlusselement. Das Nadelverschlusselement ist zwischen einer ersten Betriebsstellung, in welcher ein Einströmen von schmelzeförmigem Kunststoffmaterial aus dem wenigstens einen Heißkanal bzw. der Heißkanalstruktur in den wenigstens einen Kaltkanal bzw. die Kaltkanalstruktur nicht möglich ist, und einer zweiten Betriebsstellung, in welcher ein Einströmen von schmelzeförmigem Kunststoffmaterial aus dem wenigstens einen Heißkanal bzw. der Heißkanalstruktur in den wenigstens einen Kaltkanal bzw. die Kaltkanalstruktur möglich ist, bewegbar gelagert. Eine Bewegung des Nadelverschlusselements ist typischerweise über eine diesem zugeordnete, z. B. motorische, Antriebseinrichtung realisiert, über welche sich eine das Nadelverschlusselement zwischen jeweiligen Betriebsstellungen bewegende Antriebskraft ausbilden lässt. Die Nadelverschlusseinrichtung ist insbesondere eingerichtet, ein gezieltes Einströmen von schmelzeförmigem zweiten Kunststoffmaterial aus dem Heißkanal in den Kaltkanal zu ermöglichen, um die erwähnte Anordnung der schmelzeförmigen Kunststoffmaterialien in dem Kaltkanal, d. h. ein gleichzeitiges Strömen des die Hautkomponente des herzustellenden Kunststoffbauteils bildenden ersten Kunststoffmaterials und des die Kernkomponente des herzustellenden Kunststoffbauteils bildenden zweiten Kunststoffmaterials zu ermöglichen.

Zur Steuerung von Bewegungen des Nadelverschlusselements kann der Nadelverschlusseinrichtung bzw. einer der Nadelverschlusseinrichtung zugeordneten Antriebseinrichtung eine hard- und/oder softwaremäßig implementierte Steuereinrichtung zugeordnet sein, welche zur Steuerung der Bewegung(en) des Nadelverschlusselements eingerichtet ist. Die Steuereinrichtung ist insbesondere eingerichtet, Steuerbefehle zur Bewegung des Nadelverschlusselements von der ersten Betriebsstellung in die zweite Betriebsstellung und umgekehrt zu erzeugen, wenn die Werkzeugkavität des Spritzgießwerkzeugs zumindest teilweise mit dem ersten Kunststoffmaterial gefüllt ist. Eine entsprechende teilweise Füllung der Werkzeugkavität des Spritzgießwerkzeug mit dem ersten Kunststoffmaterial, bei welcher eine Bewegung des Nadelverschlusselements von der ersten Betriebsstellung in die zweite Betriebsstellung erfolgt, bestimmt sich insbesondere anhand diverser Material- bzw. Prozessparametern, d. h. insbesondere der Fließeigenschaften des Materials bzw. der die Fließeigenschaften des Kunststoffmaterials beeinflussender Parameter, wie Temperatur, Druck, etc.

Das Nadelverschlusselement kann in der ersten Betriebsstellung zumindest abschnittsweise, insbesondere winklig, d. h. insbesondere lotrecht, bezüglich einer Längsachse des Kaltkanals, in den Kaltkanal ragen. Derart ist insbesondere in der zweiten Betriebsstellung des Nadelverschlusselements sichergestellt, dass kein Einströmen von schmelzeförmigem Kunststoffmaterial aus dem Heißkanal in den Kaltkanal ermöglicht ist.

Der wenigstens eine Kaltkanal ist vollständig in bzw. entlang einer Trennebene des Spritzgießwerkzeugs erstreckend ausgebildet. Hierbei handelt es sich um eine werkzeugtechnisch praktikable Möglichkeit der Anordnung bzw. Ausbildung des Kaltkanals.

Der wenigstens eine Kaltkanal kann, insbesondere in einem von dem Mündungsbereich in die Werkzeugkavität des Spritzgießwerkzeugs abgewandten Bereich, wenigstens einen ersten Einspritzbereich und wenigstens einen zweiten Einspritzbereich umfassen. Über jeweilige Einspritzbereiche lassen sich unterschiedliche schmelzeförmige Kunststoffmaterialien in den Kaltkanal einbringen. Über den wenigstens einen ersten Einspritzbereich kann wenigstens ein die Hautkomponente des herzustellenden Kunststoffbauteils bildendes erstes Kunststoffmaterial in den Kaltkanal einspritzbar sein. Über den wenigstens einen zweiten Einspritzbereich kann wenigstens ein die Kernkomponente des herzustellenden Kunststoffbauteils bildendes zweites Kunststoffmaterial in den Kaltkanal einspritzbar sein. Jeweilige Einspritzbereiche sind typischerweise räumlich voneinander beabstandet angeordnet bzw. ausgebildet, sodass sich unterschiedliche schmelzeförmige Kunststoffmaterialien an unterschiedlichen Stellen in den Kaltkanal einbringen lassen.

Der wenigstens eine erste Einspritzbereich kann sich zumindest abschnittsweise, insbesondere vollständig, in bzw. entlang der Trennebene des Spritzgießwerkzeugs erstreckend ausgebildet sein. Über den ersten Einspritzbereich kann ein Kunststoffmaterial sonach in bzw. entlang der Trennebene des Spritzgießwerkzeugs in den Kaltkanal eingespritzt werden.

Die Vorrichtung kann eine der Kaltkanalstruktur zugeordnete Sperreinrichtung umfassen. Die Sperreinrichtung umfasst ein, insbesondere schieberartiges, Sperrelement. Das Sperrelement ist zwischen einer ersten Betriebsstellung, in welcher ein Ein- bzw. Durchströmen des über das erste Spritzaggregat bereitgestellten schmelzeförmigen ersten Kunststoffmaterials durch den Kaltkanal nicht möglich ist, und einer zweiten Betriebsstellung, in welcher in welcher ein Ein- bzw. Durchströmen des über das erste Spritzaggregat bereitgestellten schmelzeförmigen ersten Kunststoffmaterials durch den Kaltkanal möglich ist, bewegbar gelagert. Eine Bewegung des Sperrelements ist typischerweise über eine diesem zugeordnete, z. B. motorische, Antriebseinrichtung realisiert, über welche sich eine das Sperrelement zwischen jeweiligen Betriebsstellungen bewegende Antriebskraft ausbilden lässt. Die Sperreinrichtung ist insbesondere eingerichtet, ein gezieltes Einströmen von schmelzeförmigem ersten Kunststoffmaterial in den Kaltkanal zu ermöglichen oder zu unterbinden.

In einer alternativen oder ergänzenden Ausführungsform kann der wenigstens eine oder wenigstens ein weiterer erster Einspritzbereich mit einer wenigstens einen von einem schmelzeförmigen ersten Kunststoffmaterial durchströmbaren weiteren bzw. zweiten Heißkanal umfassenden weiteren Heißkanalstruktur verbindbar oder verbunden sein. Der weitere Heißkanal bzw. die weitere Heißkanalstruktur mündet in den Kaltkanal bzw. in die Kaltkanalstruktur. Die weitere Heißkanalstruktur kann in dem gleichen Werkzeugelement des Spritzgießwerkzeugs wie die erste Heißkanalstruktur angeordnet bzw. ausgebildet sein. Der weitere Heißkanal ist analog dem ersten Heißkanal über geeignete spritzgießwerkzeugseitige Heizeinrichtungen, d. h. z. B. von einem Heizfluid durchströmbare, gegebenenfalls additiv bzw. generativ ausgebildete, Temperierkanäle, beheizbar bzw. durch geeignete spritzgießwerkzeugseitige thermische Isoliereinrichtungen thermisch isoliert.

Analog der weiter oben genannten ersten Heißkanalstruktur, d. h. der Heißkanalstruktur, welche den ersten Heißkanal umfasst, welcher im Betrieb der Vorrichtung typischerweise von dem die Kernkomponente des herzustellenden Kunststoffbauteils bildenden zweiten schmelzeförmigen Kunststoffmaterial durchströmbar bzw. durchströmt ist, kann auch der weiteren Heißkanalstruktur eine Nadelverschlusseinrichtung zugeordnet sein. Auch diese Nadelverschlusseinrichtung umfasst wenigstens ein Nadelverschlusselement. Das Nadelverschlusselement ist zwischen einer ersten Betriebsstellung, in welcher ein Einströmen von schmelzeförmigem (ersten) Kunststoffmaterial aus dem wenigstens einen weiteren Heißkanal in den wenigstens einen Kaltkanal bzw. die Kaltkanalstruktur nicht möglich ist, und einer zweiten Betriebsstellung, in welcher ein Einströmen von schmelzeförmigem (ersten) Kunststoffmaterial aus dem weiteren Heißkanal bzw. der weiteren Heißkanalstruktur in den Kaltkanal bzw. die Kaltkanalstruktur möglich ist, bewegbar gelagert. Eine Bewegung des Nadelverschlusselements ist wiederum typischerweise über eine diesem zugeordnete, z. B. motorische, Antriebseinrichtung realisiert, über welche sich eine das Nadelverschlusselement zwischen jeweiligen Betriebsstellungen bewegende Antriebskraft ausbilden lässt. Die Nadelverschlusseinrichtung ist insbesondere eingerichtet, ein gezieltes Einströmen von schmelzeförmigem (ersten) Kunststoffmaterial aus dem weiteren Heißkanal in den Kaltkanal zu ermöglichen, um, die erwähnte Anordnung der Kunststoffmaterialien in dem Kaltkanal, d. h. ein gleichzeitiges Strömen des die Hautkomponente des herzustellenden Kunststoffbauteils bildenden ersten Kunststoffmaterials und des die Kernkomponente des herzustellenden Kunststoffbauteils bildenden zweiten Kunststoffmaterials zu ermöglichen, oder zu unterbinden.

Der wenigstens eine weitere Heißkanal der weiteren Heißkanalstruktur kann, insbesondere unmittelbar, mit wenigstens einem das schmelzeförmige erste Kunststoffmaterial bereitstellenden ersten Spritzaggregat verbindbar oder verbunden sein. Ein entsprechendes erstes Spritzaggregat lässt sich im Betrieb der Vorrichtung sonach an den weiteren Heißkanal bzw. die weitere Heißkanalstruktur andocken, um ein schmelzeförmiges erstes Kunststoffmaterial in diesen, weiter in den Kaltkanal und von diesem weiter in die Werkzeugkavität des Spritzgießwerkzeugs einzuspritzen.

An dieser Stelle ist nochmals allgemein anzumerken, dass jeweilige Heißkanalstrukturen der Vorrichtung in einem ersten Werkzeugelement des Spritzgießwerkzeugs angeordnet bzw. ausgebildet sein können. Prinzipiell ist es jedoch auch möglich, dass jeweilige Heißkanalstrukturen in unterschiedlichen Werkzeugelementen des Spritzgießwerkzeugs angeordnet bzw. ausgebildet sind.

Der wenigstens eine Heißkanal der Heißkanalstruktur, gegebenenfalls auch der wenigstens eine weitere Heißkanal der weiteren Heißkanalstruktur, kann bzw. können sich zumindest mit einem in der Schließstellung des formgebenden Spritzgießwerkzeugs in den Kaltkanal mündenden Heißkanalabschnitt winklig, insbesondere lotrecht, relativ zu dem Kaltkanal erstreckend angeordnet bzw. ausgebildet sein. Derart ist ein winkliges, insbesondere lotrechtes, Einspritzen der jeweiligen schmelzeförmigen Kunststoffmaterialien in den Kaltkanal möglich.

Allgemein gilt, dass es sich, wie eingangs erwähnt, bei dem ersten und dem zweiten Kunststoffmaterial jeweils um ein thermo- oder duroplastisches Kunststoffmaterial handeln kann. Die Auswahl konkreter Kunststoffmaterialien erfolgt typischerweise im Hinblick auf zu erzielende Eigenschaften der haut- und Kernkomponente des herzustellenden Kunststoffbauteils. Um eine besondere Griffigkeit bzw. Haptik im Bereich der Hautkomponente zu erzielen, kann es sich bei dem die Hautkomponente bildenden ersten Kunststoffmaterial etwa um ein thermoplastisches Elastomer (TPE) handeln. Um besondere optische Eigenschaften zu erzielen, kann es sich bei dem die Hautkomponenten bildenden ersten Kunststoffmaterial und bei dem die Kernkomponente bildenden zweiten Kunststoffmaterial jeweils um ein (weitgehend) transparentes Kunststoffmaterial, d. h. z. B. um Polycarbonat (PC) oder um Polymethylmetacrylat (PMMA), handeln. Um besondere mechanische Eigenschaften zu erzielen, kann das erste und/oder das zweite Kunststoffmaterial Verstärkungsfasern, d. h. z. B. Glasfasern, enthalten.

In allen Fällen ist es möglich, dass, insbesondere zum Zwecke der Gewichtsreduzierung des Kunststoffbauteils, insbesondere das zweite Kunststoffmaterial geschäumt ist. In dem beispielhaften Fall der Verwendung zweier (weitgehend) transparenter Kunststoffmaterialien kann das zweite Kunststoffmaterial geschäumt sein, um besondere optische Eigenschaften im Inneren des Kunststoffbauteils zu erzielen.

Neben der Vorrichtung betrifft die Erfindung auch ein Verfahren zur Herstellung eines eine durch ein erstes Kunststoffmaterial gebildete Hautkomponente sowie eine durch ein zweites Kunststoffmaterial gebildete, von der Hautkomponente umgebene Kernkomponente umfassenden Kunststoffbauteils, d. h. insbesondere eines Koinjektionsbauteils. Das Verfahren zeichnet sich dadurch aus, dass zu dessen Durchführung eine wie beschriebene Vorrichtung verwendet wird. Sämtliche Ausführungen im Zusammenhang mit der Vorrichtung gelten demnach analog für das Verfahren.

Ausführungsbeispiele der Erfindung sind im Zusammenhang mit den nachfolgend beschriebenen Zeichnungen erläutert. Dabei zeigen:

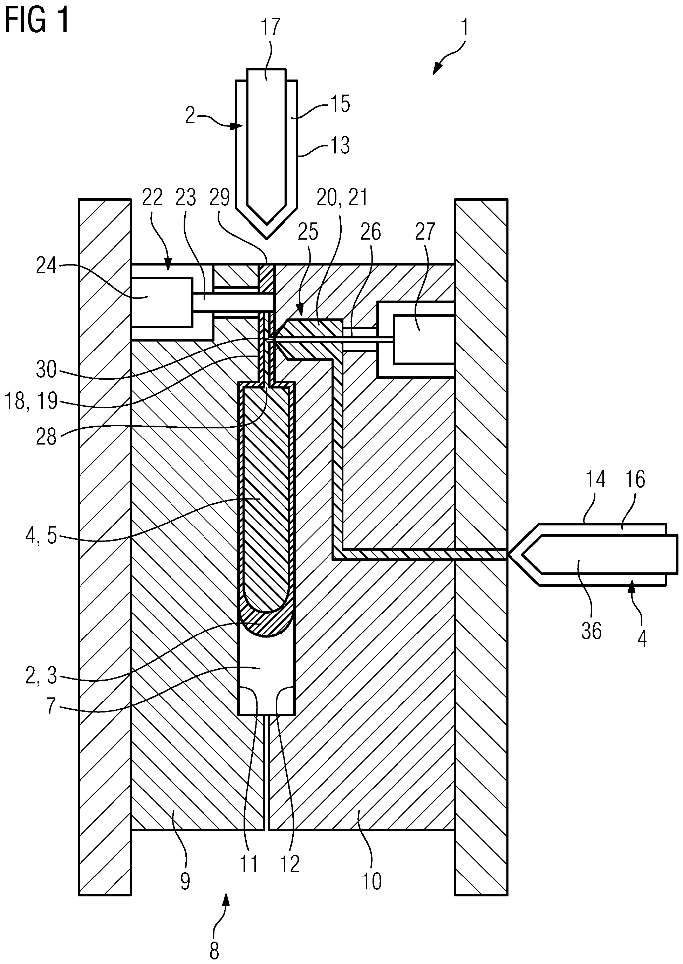

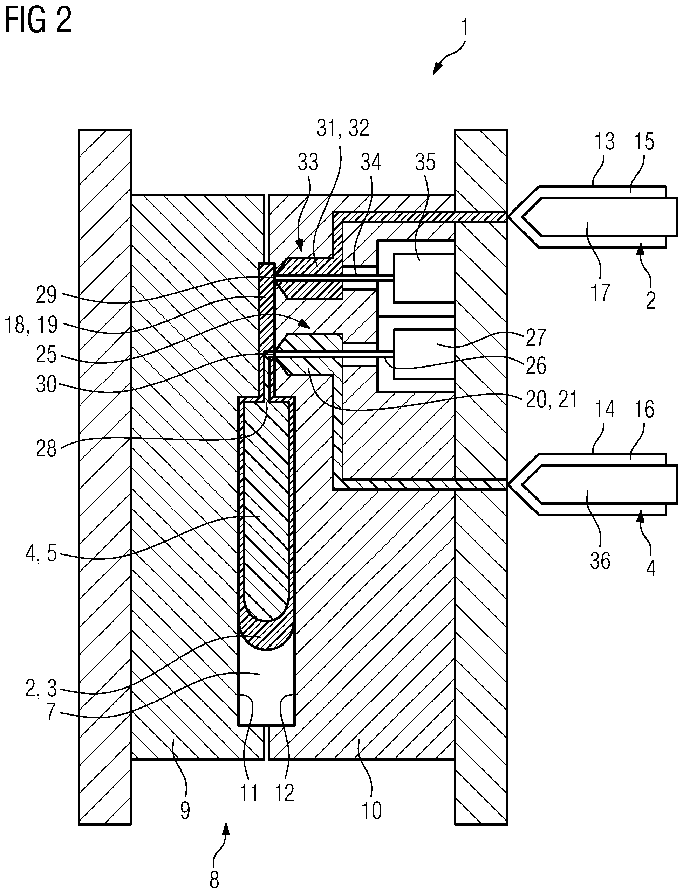

Fig. 1, 2 je eine Prinzipdarstellung einer Vorrichtung gemäß einem Ausführungsbeispiel.

Fig. 1 zeigt eine Prinzipdarstellung einer Vorrichtung 1 gemäß einem Ausführungsbeispiel der Erfindung. Die Vorrichtung 1 ist in Fig. 1 in einer geschnittenen Ansicht dargestellt.

Die Vorrichtung 1 ist zur Herstellung von eine durch ein erstes Kunststoffmaterial 2 gebildete Hautkomponente 3 sowie eine durch ein zweites Kunststoffmaterial 4 gebildete, von der Hautkomponente 3 umgebene bzw. umschlossene Kernkomponente 5 umfassenden Kunststoffbauteilen, insbesondere von Koinjektionsbauteilen, eingerichtet. Die Vorrichtung 1 kann sonach insbesondere als Koinjektionsspritzgießvorrichtung, d. h. als eine Vorrichtung zur Durchführung von Koinjektionsspritzgießverfahren, bei welchen wenigstens zwei schmelzeförmige Kunststoffmaterialien 2, 4 (Kunststoffschmelzen) in eine formgebende Werkzeugkavität 7 eines Spritzgießwerkzeugs 8 eingespritzt werden, ausgebildet sein.

Die Vorrichtung 1 umfasst ein zwei Werkzeugelemente 9, 10 (Werkzeughälften) umfassendes Spritzgießwerkzeug 8. Ein an einem nicht weiter bezeichneten ersten Werkzeugelementaufspannelement angeordnetes erstes Werkzeugelement, d. h. z. B. das in den Fig. linke Werkzeugelement 9, ist relativ zu wenigstens einem an einem nicht weiter bezeichneten zweiten Werkzeugelementaufspannelement angeordneten zweiten Werkzeugelement 10, d. h. z. B. dem in den Fig. rechten Werkzeugelement, zwischen wenigstens zwei mit einer Offen- und einer Schließstellung des Spritzgießwerkzeugs 8 korrelierten Betriebspositionen bewegbar gelagert. Das Spritzgießwerkzeug 8 ist demnach durch entsprechende Relativbewegungen der Werkzeugelemente 9, 10 in eine Offenstellung und in eine in den Fig. gezeigte Schließstellung überführbar. Die Werkzeugelemente 9, 10 sind jeweils mit einer formgebenden Werkzeugoberfläche 11, 12 bzw. -kontur ausgebildet. Über die Werkzeugelemente 9, 10, d. h. über die an diesen jeweils ausgebildeten formgebenden Werkzeugoberflächen 11, 12 bzw. -konturen, ist in der Schließstellung des Spritzgießwerkzeugs 8 eine geschlossene formgebende Werkzeugkavität 7 des Spritzgießwerkzeugs 8 ausbildbar bzw. ausgebildet. Im Betrieb der Vorrichtung 1 werden die das jeweilige mit der Vorrichtung 1 herzustellende Kunststoffbauteil bildenden Kunststoffmaterialien 2, 4 in die formgebende Werkzeugkavität 7 eingespritzt.

An das Spritzgießwerkzeug 8 sind zwei Spritzaggregate 13, 14 andockbar. Jeweilige Spritzaggregate 13, 14 umfassten ein in einem Förderraum 15, 16 bewegbares, insbesondere schneckenartiges, Fördermittel 17, 36, über welches sich ein schmelzeförmiges Kunststoffmaterial 2, 4 fördern lässt. Über die jeweiligen Spritzaggregate 13, 14 lassen sich damit die Kunststoffmaterialien 2, 4 bereitstellen. Ein erstes Spritzaggregat 13 stellt das die Hautkomponente 3 des Kunststoffbauteils bildende erste Kunststoffmaterial 2 (erste Kunststoffschmelze) bereit, ein zweites Spritzaggregat 14 stellt das die Kernkomponente 5 des Kunststoffbauteils bildende zweite Kunststoffmaterial 4 (zweite Kunststoffschmelze) bereit.

Die Vorrichtung 1 umfasst eine Kaltkanalstruktur 18. Die Kaltkanalstruktur 18 umfasst einen von wenigstens einem schmelzeförmigen Kunststoffmaterial 2, 4 durchströmbaren Kaltkanal 19. Der Kaltkanal 19 mündet zumindest in der Schließstellung des Spritzgießwerkzeugs 8 (unmittelbar) in die Werkzeugkavität 7. Wie sich im Weiteren ergibt, wird der Kaltkanal 19 zumindest abschnittsweise gleichzeitig von den das herzustellende Kunststoffbauteil bildenden schmelzeförmigen Kunststoffmaterialien 2, 4 durchströmt. In den in den Fig. gezeigten Ausführungsbeispielen ist der Kaltkanal 19 sich in bzw. entlang einer Trennebene des Spritzgießwerkzeugs 8 erstreckend ausgebildet.

Die Kaltkanalstruktur 18 ist mit dem das schmelzeförmige erste Kunststoffmaterial 2 bereitstellenden ersten Spritzaggregat 13 verbindbar bzw. verbunden. Das erste Spritzaggregat 13 lässt sich im Betrieb der Vorrichtung 1 sonach an den Kaltkanal 19 bzw. die Kaltkanalstruktur 18 andocken, um das schmelzeförmige erste Kunststoffmaterial 2 in diese(n), weiter in den Kaltkanal 19 und von diesem weiter in die Werkzeugkavität 7 einzuspritzen.

Der Kaltkanalstruktur 18 ist eine Sperreinrichtung 22 zugeordnet. Die Sperreinrichtung 22 umfasst ein, insbesondere schieberartiges, Sperrelement 23. Das Sperrelement 23 ist zwischen einer ersten Betriebsstellung, in welcher ein Ein- bzw. Durchströmen des über das erste Spritzaggregat 13 bereitgestellten schmelzeförmigen ersten Kunststoffmaterials 2 durch den Kaltkanal 19 nicht möglich ist, und einer zweiten Betriebsstellung, in welcher in welcher ein Ein- bzw. Durchströmen des über das erste Spritzaggregat 13 bereitgestellten schmelzeförmigen ersten Kunststoffmaterials 2 durch den Kaltkanal 19 möglich ist, bewegbar gelagert. Eine Bewegung des Sperrelements 23 ist über eine diesem zugeordnete, z. B. motorische, Antriebseinrichtung 24 realisiert, über welche sich eine das Sperrelement 23 zwischen jeweiligen Betriebsstellungen bewegende Antriebskraft ausbilden lässt. Die Sperreinrichtung 22 ist eingerichtet, ein gezieltes Einströmen von schmelzeförmigem ersten Kunststoffmaterial 2 in den Kaltkanal 19 zu ermöglichen oder zu unterbinden.

Zur Steuerung von Bewegungen des Sperrelements 23 kann der Sperreinrichtung 22 bzw. der Antriebseinrichtung 24 eine hard- und/oder softwaremäßig implementierte Steuereinrichtung (nicht gezeigt) zugeordnet sein, welche zur Steuerung der Bewegung(en) des Sperrelements 23 eingerichtet ist. Die Steuereinrichtung ist insbesondere eingerichtet, Steuerbefehle zur Bewegung des Sperrelements 23 von der ersten Betriebsstellung in die zweite Betriebsstellung und umgekehrt zu erzeugen.

Die Vorrichtung 1 umfasst ferner eine Heißkanalstruktur 20. Die (erste) Heißkanalstruktur 20 ist z. B. in dem in den Fig. rechten Werkzeugelement 10 des Spritzgießwerkzeugs 8 angeordnet bzw. ausgebildet. Die (erste) Heißkanalstruktur 20 umfasst einen von dem zweiten Kunststoffmaterial 4 zur Ausbildung der Kernkomponente 5 des herzustellenden Kunststoffbauteils durchströmbaren (ersten) Heißkanal 21. Der (erste) Heißkanal 21 ist über geeignete spritzgießwerkzeugseitige Heizeinrichtungen (nicht gezeigt), d. h. z. B. von einem Heizfluid durchströmbare, gegebenenfalls additiv bzw. generativ ausgebildete, Temperierkanäle, beheizbar bzw. durch geeignete spritzgießwerkzeugseitige thermische Isoliereinrichtungen thermisch isoliert.

Die Heißkanalstruktur 20 ist mit dem das schmelzeförmige zweite Kunststoffmaterial 4 bereitstellenden (zweiten) Spritzaggregat 14 verbindbar bzw. verbunden. Das zweite Spritzaggregat 14 lässt sich im Betrieb der Vorrichtung 1 sonach an den Heißkanal 21 bzw. die Heißkanalstruktur 20 andocken, um das schmelzeförmige zweite Kunststoffmaterial 4 in diese(n), weiter in den Kaltkanal 19 und von diesem weiter in die Werkzeugkavität 7 einzuspritzen.

Ersichtlich mündet der Heißkanal 21 in der Schließstellung des Spritzgießwerkzeugs 8 (unmittelbar) in den Kaltkanal 19. Dadurch, dass der Heißkanal 21 in der Schließstellung des Spritzgießwerkzeugs 8 unmittelbar in den Kaltkanal 19 mündet, ist es möglich, das zweite schmelzeförmige Kunststoffmaterial 4 in das Innere ("Seele") des den Kaltkanal 19 bereits durchströmenden schmelzeförmigen ersten Kunststoffmaterials 2 einzubringen, sodass bereits in einem Abschnitt des Kaltkanals 19, d. h. insbesondere einem Endabschnitt bezüglich des in die Werkzeugkavität 7 mündenden Mündungsbereichs 28 des Kaltkanals 19, eine Anordnung des ersten Kunststoffmaterials 2 und des von dem ersten Kunststoffmaterial 2 umgebenen bzw. umschlossenen zweiten Kunststoffmaterials 4 auszubilden. Mithin lässt sich bereits in einem Abschnitt des Kaltkanals 19 ein gleichzeitiges Strömen des die Hautkomponente 3 des herzustellenden Kunststoffbauteils bildenden ersten Kunststoffmaterials 2 und des die Kernkomponente 5 des herzustellenden Kunststoffbauteils bildenden zweiten Kunststoffmaterials 4 ausbilden, derart, dass das zweite Kunststoffmaterial 4 von dem ersten Kunststoffmaterial 2 umgeben bzw. umschlossen ist; das zweite Kunststoffmaterial 4 strömt sonach innerhalb des durch den Kaltkanal 19 in die Werkzeugkavität 7 strömenden ersten Kunststoffmaterials 2 in die Werkzeugkavität 7.

Der Heißkanalstruktur 20 ist eine Nadelverschlusseinrichtung 25 zugeordnet. Die Nadelverschlusseinrichtung 25 umfasst ein Nadelverschlusselement 26. Das Nadelverschlusselement 26 ist zwischen einer ersten Betriebsstellung, in welcher ein Einströmen von schmelzeförmigem zweiten Kunststoffmaterial 4 aus dem Heißkanal 21 in den Kaltkanal 19 nicht möglich ist, und einer in den Fig. zweiten Betriebsstellung, in welcher ein Einströmen von schmelzeförmigem zweiten Kunststoffmaterial 4 aus dem Heißkanal 21 in den Kaltkanal 19 möglich ist, bewegbar gelagert. Eine Bewegung des in den in den Fig. gezeigten Ausführungsbeispielen beispielhaft in der ersten Betriebsstellung zumindest abschnittsweise, insbesondere winklig, d. h. insbesondere lotrecht, bezüglich einer Längsachse des Kaltkanals 19, in den Kaltkanal 19 ragende Nadelverschlusselements 26 ist über eine diesem zugeordnete, z. B. motorische, Antriebseinrichtung 27 realisiert, über welche sich eine das Nadelverschlusselement 26 zwischen jeweiligen Betriebsstellungen bewegende Antriebskraft ausbilden lässt. Die Nadelverschlusseinrichtung 25 ist eingerichtet, ein gezieltes Einströmen von schmelzeförmigem zweiten Kunststoffmaterial 4 aus dem Heißkanal 21 in den Kaltkanal 19 zu ermöglichen, um die erwähnte Anordnung der schmelzeförmigen Kunststoffmaterialien 2, 4 in dem Kaltkanal 19, d. h. ein gleichzeitiges Strömen des die Hautkomponente 3 bildenden ersten Kunststoffmaterials 2 und des die Kernkomponente 5 bildenden zweiten Kunststoffmaterials 4 zu ermöglichen.

Zur Steuerung von Bewegungen des Nadelverschlusselements 26 kann der Nadelverschlusseinrichtung 25 bzw. der Antriebseinrichtung 27 eine hard- und/oder softwaremäßig implementierte Steuereinrichtung (nicht gezeigt) zugeordnet sein, welche zur Steuerung der Bewegung(en) des Nadelverschlusselements 26 eingerichtet ist. Die Steuereinrichtung ist insbesondere eingerichtet, Steuerbefehle zur Bewegung des Nadelverschlusselements 26 von der ersten Betriebsstellung in die zweite Betriebsstellung und umgekehrt zu erzeugen, wenn die Werkzeugkavität 7 des Spritzgießwerkzeugs 8 zumindest teilweise mit dem ersten Kunststoffmaterial 2 gefüllt ist.

Der Kaltkanal 19 umfasst in einem von dem Mündungsbereich 28 in die Werkzeugkavität 7 abgewandten Bereich, einen ersten Einspritzbereich 29 und einen zweiten Einspritzbereich 30. Über jeweilige Einspritzbereiche 29, 30 lassen sich unterschiedliche schmelzeförmige Kunststoffmaterialien 2, 4 in den Kaltkanal 19 einbringen. Über den ersten Einspritzbereich 29 ist das die Hautkomponente 3 bildende erste Kunststoffmaterial 2 in den Kaltkanal 19 einspritzbar, über den zweiten Einspritzbereich 30 ist das die Kernkomponente 5 bildende zweite Kunststoffmaterial 4 in den Kaltkanal 19 einspritzbar. Jeweilige Einspritzbereiche 29, 30 sind ersichtlich räumlich voneinander beabstandet angeordnet bzw. ausgebildet, sodass sich unterschiedliche schmelzeförmige Kunststoffmaterialien 2, 4 an unterschiedlichen Stellen in den Kaltkanal 19 einbringen/einspritzen lassen. In dem in Fig. 1 gezeigten Ausführungsbeispiel ist der erste Einspritzbereich 29 in dem Bereich, in welchem sich das erste Spritzaggregat 13 an den Kaltkanal 19 andocken lässt gebildet, der erste Einspritzbereich 29 ist sich in bzw. entlang der Trennebene des Spritzgießwerkzeugs 8 erstreckend ausgebildet; der zweite Einspritzbereich 30 ist in dem Bereich, in welchem der Heißkanal 21 in den Kaltkanal 19 mündet, gebildet.

Fig. 2 zeigt eine Prinzipdarstellung einer Vorrichtung 1 gemäß einem Ausführungsbeispiel, welches isoliert betrachtet kein Ausführungsbeispiel der Erfindung darstellt. Die Vorrichtung 1 ist in Fig. 2 in einer geschnittenen Ansicht dargestellt.

Das in Fig. 2 gezeigte Ausführungsbeispiel unterscheidet sich von dem in Fig. 1 gezeigten Ausführungsbeispiel darin, dass der erste Einspritzbereich 29 mit einer einen von dem schmelzeförmigen ersten Kunststoffmaterial 2 durchströmbaren zweiten Heißkanal 31 umfassenden zweiten Heißkanalstruktur 32 verbindbar bzw. verbunden ist. Auch der zweite Heißkanal 31 mündet in den Kaltkanal 19. Die zweite Heißkanalstruktur 32 ist in dem gleichen Werkzeugelement 10 des Spritzgießwerkzeugs 8 wie die erste Heißkanalstruktur 20 angeordnet bzw. ausgebildet. Der zweite Heißkanal 31 ist analog dem ersten Heißkanal 21 über geeignete spritzgießwerkzeugseitige Heizeinrichtungen, d. h. z. B. von einem Heizfluid durchströmbare, gegebenenfalls additiv bzw. generativ ausgebildete, Temperierkanäle, beheizbar bzw. durch geeignete spritzgießwerkzeugseitige thermische Isoliereinrichtungen thermisch isoliert.

Der zweite Heißkanal 31 ist, insbesondere unmittelbar, mit dem das schmelzeförmige erste Kunststoffmaterial 2 bereitstellenden ersten Spritzaggregat 13 verbindbar bzw. verbunden. Das erste Spritzaggregat 13 lässt sich im Betrieb der Vorrichtung 1 sonach an den zweiten Heißkanal 31 andocken, um schmelzeförmiges erstes Kunststoffmaterial 2 in diesen, weiter in den Kaltkanal 19 und von diesem weiter in die Werkzeugkavität 7 des Spritzgießwerkzeugs 8 einzuspritzen.

Analog der ersten Heißkanalstruktur 20 ist auch der zweiten Heißkanalstruktur 32 eine Nadelverschlusseinrichtung 33 zugeordnet. Auch diese zweite Nadelverschlusseinrichtung 33 umfasst ein Nadelverschlusselement 34, welches zwischen einer ersten Betriebsstellung, in welcher ein Einströmen von schmelzeförmigem ersten Kunststoffmaterial 2 aus dem zweiten Heißkanal 31 in den Kaltkanal 19 nicht möglich ist, und einer zweiten Betriebsstellung, in welcher ein Einströmen von schmelzeförmigem ersten Kunststoffmaterial 2 aus dem zweiten Heißkanal 31 in den Kaltkanal 19 möglich ist, bewegbar gelagert. Eine Bewegung des Nadelverschlusselements 34 ist über eine diesem zugeordnete, z. B. motorische, Antriebseinrichtung 35 realisiert, über welche sich eine das Nadelverschlusselement 34 zwischen jeweiligen Betriebsstellungen bewegende Antriebskraft ausbilden lässt. Die Nadelverschlusseinrichtung 33 ist eingerichtet, ein gezieltes Einströmen von schmelzeförmigem ersten Kunststoffmaterial 2 aus dem Heißkanal 31 in den Kaltkanal 19 zu ermöglichen, um die erwähnte Anordnung der schmelzeförmigen Kunststoffmaterialien 2, 4 in dem Kaltkanal 19, d. h. ein gleichzeitiges Strömen des die Hautkomponente 3 bildenden ersten Kunststoffmaterials 2 und des die Kernkomponente 5 bildenden zweiten Kunststoffmaterials 4 zu ermöglichen oder zu unterbinden.

In den in den Fig. gezeigten Ausführungsbeispielen sind die jeweiligen Heißkanäle 21, 31 der Heißkanalstrukturen 20, 32 rein beispielhaft sich zumindest mit einem in der Schließstellung des Spritzgießwerkzeugs 8 in den Kaltkanal 19 mündenden Heißkanalabschnitt winklig, insbesondere lotrecht, relativ zu dem Kaltkanal 19 erstreckend angeordnet bzw. ausgebildet.

Das in Fig. 2 gezeigte Ausführungsbeispiel lässt sich mit dem in Fig. 1 gezeigten Ausführungsbeispiel kombinieren, sodass die Vorrichtung 1 prinzipiell mit drei Spritzaggregaten 13, 14 ausgestattet werden könnte. Mithin ließen sich Kunststoffbauteile aus drei unterschiedlichen Kunststoffmaterialien, d. h. insbesondere einem eine Hautkomponente bildenden Kunststoffmaterial und zwei zwei unterschiedliche Kernkomponenten bildenden Kunststoffmaterialien, herstellen. Der Kaltkanal 19 könnte sonach zumindest abschnittsweise von drei unterschiedlichen Kunststoffmaterialien durchströmbar bzw. durchströmt sein. Mit der in den Fig. gezeigten Vorrichtung 1 lässt sich ein Verfahren zur Herstellung eines eine durch ein erstes Kunststoffmaterial 2 gebildete Hautkomponente 3 sowie eine durch ein zweites Kunststoffmaterial 4 gebildete, von der Hautkomponente 3 umgebene Kernkomponente 5 umfassenden Kunststoffbauteils, d. h. insbesondere eines Koinjektionsbauteils, implementieren.

## Patentansprüche

1. Vorrichtung (1) zur Herstellung eines eine durch ein erstes Kunststoffmaterial (2) gebildete Hautkomponente (3) sowie eine durch ein zweites Kunststoffmaterial (4) gebildete, von der Hautkomponente (3) umgebene Kernkomponente (5) umfassenden Kunststoffbauteils, umfassend:
- ein wenigstens zwei Werkzeugelemente (9, 10) umfassendes Spritzgießwerkzeug (8), wobei über die wenigstens zwei Werkzeugelemente (9, 10) in einer Schließstellung des Spritzgießwerkzeugs (8) wenigstens eine formgebende Werkzeugkavität (7) ausbildbar oder ausgebildet ist,
- eine wenigstens einen von einem schmelzeförmigen Kunststoffmaterial (2, 4) durchströmbaren, zumindest in der Schließstellung des Spritzgießwerkzeugs (8) in die Werkzeugkavität (7) mündenden Kaltkanal (19) umfassende Kaltkanalstruktur (18),
- eine wenigstens einen von einem schmelzeförmigen Kunststoffmaterial (2, 4), insbesondere einem zweiten Kunststoffmaterial (4) zur Ausbildung der Kernkomponente (5) des herzustellenden Kunststoffbauteils, durchströmbaren, zumindest in der Schließstellung des Spritzgießwerkzeugs (8) in den wenigstens einen Kaltkanal (19) mündenden Heißkanal (21) umfassende Heißkanalstruktur (20),
- eine der Heißkanalstruktur (20) zugeordnete Nadelverschlusseinrichtung (25), wobei die Nadelverschlusseinrichtung (25) ein zwischen einer ersten Betriebsstellung, in welcher ein Einströmen von schmelzeförmigem Kunststoffmaterial (4) aus dem wenigstens einen Heißkanal (21) in den wenigstens einen Kaltkanal (19) nicht möglich ist, und einer zweiten Betriebsstellung, in welcher ein Einströmen von schmelzeförmigen Kunststoffmaterial (4) aus dem wenigstens einen Heißkanal (21) in den wenigstens einen Kaltkanal (19) möglich ist, bewegbar gelagertes Nadelverschlusselement (26) umfasst, **dadurch gekennzeichnet, dass** der wenigstens eine Kaltkanal (19) sich vollständig entlang einer Trennebene des Spritzgießwerkzeugs (8) erstreckend ausgebildet ist, wobei sich der wenigstens eine Kaltkanal (19) entlang der Trennebene des Spritzgießwerkzeugs (8) von der Werkzeugkavität (7) bis zu einem Rand des Spritzgießwerkzeugs (8) erstreckt.

2. Vorrichtung nach Anspruch 1, **dadurch gekennzeichnet, dass** das Nadelverschlusselement (26) in der ersten Betriebsstellung abschnittsweise, insbesondere winklig, gegebenenfalls lotrecht, bezüglich einer Längsachse des Kaltkanals (19), in den wenigstens einen Kaltkanal (19) ragt.

3. Vorrichtung nach Anspruch 1 oder 2, **gekennzeichnet durch** eine Steuereinrichtung, welche zur Steuerung von Bewegungen des Nadelverschlusselements (26) eingerichtet ist, wobei die Steuereinrichtung eingerichtet ist, Steuerbefehle zur Bewegung des Nadelverschlusselements (26) von der ersten Betriebsstellung in die zweite Betriebsstellung zu erzeugen, wenn die Werkzeugkavität (7) zumindest teilweise mit dem ersten Kunststoffmaterial (2) gefüllt ist.

4. Vorrichtung nach einem der vorhergehenden Ansprüche, **dadurch gekennzeichnet, dass** der wenigstens eine Kaltkanal, insbesondere in einem von dem Mündungsbereich (28) in die Werkzeugkavität (7) abgewandten Bereich, wenigstens einen ersten und wenigstens einen zweiten Einspritzbereich (29, 30) aufweist.

5. Vorrichtung nach Anspruch 4, **dadurch gekennzeichnet, dass** über den wenigstens einen ersten Einspritzbereich (29) wenigstens ein die Hautkomponente (3) des herzustellenden Kunststoffbauteils bildendes schmelzeförmiges erstes Kunststoffmaterial (2) in den Kaltkanal (19) einspritzbar ist, und
über den wenigstens einen zweiten Einspritzbereich (30) wenigstens ein die Kernkomponente (5) des herzustellenden Kunststoffbauteils bildendes schmelzeförmiges zweites Kunststoffmaterial (4) in den Kaltkanal (19) einspritzbar ist.

6. Vorrichtung nach Anspruch 5, **dadurch gekennzeichnet, dass** der wenigstens eine erste Einspritzbereich (29), insbesondere unmittelbar, mit wenigstens einem das schmelzeförmige erste Kunststoffmaterial (2) bereitstellenden Spritzaggregat (13) verbindbar oder verbunden ist.

7. Vorrichtung nach einem der vorhergehenden Ansprüche, **gekennzeichnet durch** eine der Kaltkanalstruktur (20) zugeordnete Sperreinrichtung (22), welche ein zwischen einer ersten Betriebsstellung, in welcher ein Durchströmen des über das Spritzaggregat (13) bereitgestellten schmelzeförmigen ersten Kunststoffmaterials (2) durch den Kaltkanal (19) nicht möglich ist, und einer zweiten Betriebsstellung, in welcher in welcher ein Durchströmen des über das Spritzaggregat (13) bereitgestellten schmelzeförmigen ersten Kunststoffmaterials (2) durch den Kaltkanal (19) möglich ist, bewegbar gelagertes, insbesondere schieberartiges, Sperrelement (23) umfasst.

8. Vorrichtung nach einem der Ansprüche 5 bis 7, **dadurch gekennzeichnet, dass** der wenigstens eine oder wenigstens ein weiterer erster Einspritzbereich (29) mit einer wenigstens einen von einem schmelzeförmigen ersten Kunststoffmaterial (2) durchströmbaren Heißkanal (31) umfassenden weiteren Heißkanalstruktur (32) verbindbar oder verbunden ist.

9. Vorrichtung nach Anspruch 8, **gekennzeichnet durch** eine der weiteren Heißkanalstruktur (32) zugeordnete Nadelverschlusseinrichtung, wobei die Nadelverschlusseinrichtung (33) ein zwischen einer ersten Betriebsstellung, in welcher ein Einströmen von schmelzeförmigem ersten Kunststoffmaterial (2) aus dem wenigstens einen weiteren Heißkanal (31) in den wenigstens einen Kaltkanal (19) nicht möglich ist, und einer zweiten Betriebsstellung, in welcher ein Einströmen von schmelzeförmigem ersten Kunststoffmaterial (2) aus dem wenigstens einen weiteren Heißkanal (31) in den wenigstens einen Kaltkanal (19) möglich ist, bewegbar gelagertes Nadelverschlusselement (34) umfasst.

10. Vorrichtung nach Anspruch 8 oder 9, **dadurch gekennzeichnet, dass** der wenigstens eine weitere Heißkanal (31) der weiteren Heißkanalstruktur (32), insbesondere unmittelbar, mit wenigstens einem das schmelzeförmige erste Kunststoffmaterial (2) bereitstellenden Spritzaggregat (16) verbindbar oder verbunden ist.

11. Vorrichtung nach einem der vorhergehenden Ansprüche, **dadurch gekennzeichnet, dass** die Heißkanalstruktur (20), gegebenenfalls auch die weitere Heißkanalstruktur (32), in einem ersten Werkzeugelement (10) des Spritzgießwerkzeugs (8) angeordnet oder ausgebildet sind.

12. Vorrichtung nach einem der vorhergehenden Ansprüche, **dadurch gekennzeichnet, dass** der wenigstens eine Heißkanal (21) der Heißkanalstruktur (20), gegebenenfalls auch der wenigstens eine weitere Heißkanal (31) der weiteren Heißkanalstruktur (32), sich zumindest in einem in der Schließstellung des Spritzgießwerkzeugs (8) in den wenigstens einen Kaltkanal (19) mündenden Heißkanalabschnitt winklig, insbesondere lotrecht, relativ zu dem wenigstens einen Kaltkanal (19) erstreckend angeordnet oder ausgebildet ist.

13. Vorrichtung nach einem der vorhergehenden Ansprüche, **dadurch gekennzeichnet, dass** die den wenigstens einen von dem die Kernkomponente (5) des herzustellenden Kunststoffbauteils bildenden zweiten Kunststoffmaterial (4) durchströmbaren Heißkanal (21) umfassende Heißkanalstruktur (20), insbesondere unmittelbar, mit wenigstens einem das schmelzeförmige zweite Kunststoffmaterial (4) bereitstellenden zweiten Spritzaggregat (16) verbindbar oder verbunden ist.

14. Verfahren zur Herstellung eines eine durch ein erstes Kunststoffmaterial (2) gebildete Hautkomponente (3) sowie eine durch ein zweites Kunststoffmaterial (4) gebildete, von der Hautkomponente (3) umgebene Kernkomponente (5) umfassenden Kunststoffbauteils, **dadurch gekennzeichnet, dass** zur Durchführung des Verfahrens eine Vorrichtung (1) gemäß einem der vorhergehenden Ansprüche verwendet wird.

## Claims

1. Device (1) for the manufacturing of a main component (3) consisting of a first plastic material (2) and a core component (5) consisting of a second plastic material (4), which is surrounded by the main component (3), comprising:
- an injection moulding tool (8), comprising at least two tool elements (9, 10), wherein at least one moulding tool cavity (7) can be formed or is formed by the at least two tool elements (9, 10) in a closed position of the injection mould tool (8),
- a cold runner structure (18), through which at least one of the molten plastic materials (2, 4) can flow and comprising at least one cold runner (19) flowing into the tool cavity (7) at least in the closed position of the injection mould tool (8),
- a hot runner structure (20) comprising a hot runner (21) flowing into the at least one cold runner (19), at least in the closed position of the injection mould tool (8), through which a molten plastic material (2, 4), in particular a second plastic material (4), can run to form the core component (5) of the plastic element to be manufactured,
one needle valve (25) arranged on the hot runner structure (20), wherein the needle valve (25)
comprises a needle valve element (26) arranged to be movable, in between a first operating position in which the influx of molten plastic material (4) from the at least one hot runner (21) into the at least one cold runner (19) is not possible and a second operating position in which an influx of molten plastic material (4) from the at least one hot runner (21) into the at least one cold runner (19) is possible, **characterised in that** the at least one cold runner (19) is embodied to extend completely along a separating level of the injection mould tool (8), wherein the at least one cold runner (19) extends along the separation level of the injection mould tool (8) from the tool cavity (7) up to a rim of the injection mould tool (8).

2. Device according to claim 1, **characterised in that** the needle valve element (26) in the first operating position protrudes, in particular in an angular, if applicable, perpendicular manner in sections relative to a longitudinal axis of the cold runner (19) into the at least one cold runner (19).

3. Device according to claim 1 or 2, **characterised in that** a control unit, which is configured for the control of movements of the needle valve element (26), wherein the control unit is configured to generate control commands for the movement of the needle valve element (26) from the first operating position into the second operating position when the tool cavity (7) is filled at least partly with the first plastic material (2).

4. Device according to one of the foregoing claims **characterised in that** the at least one cold runner, in particular in an area facing away from the mouth area (28) leading into the tool cavity (7), has at least one first and at least one second injection area (29, 30).

5. Device according to claim 4, **characterised in that** through the at least one injection area (29) at least one first molten plastic material (2), forming the main component (3) of the plastic element to be manufactured, can be injected into the cold runner (1), and
through the at least one second injection area (30), at least one second molten plastic material (4), forming the core component (3) of the plastic element to be manufactured, can be injected into the cold runner (1).

6. Device according to claim 5, **characterised in that** the at least one first injection area (29), can be connected or is connected, in particular, directly with at least one injection unit (13) providing the molten first plastic material (2).

7. Device according to one of the foregoing claims, **characterised in that** a blocking unit (22) attributed to the cold runner structure (20), comprising a blocking element (23) arranged to be movable, in particular to be slidable, in between a first operating position in which a flow of the molten first plastic material (2) provided by the injection unit (13) through the cold runner (19) is not possible, and a second operating position in which a flow of the molten first plastic material (2) provided by the injection unit (13) through the cold runner (19) is possible.

8. Device according to one of the claims 5 to 7, **characterised in that** the at least one or at last one further first injection area (29) can be connected or is connected with at least one further hot runner structure (32) comprising a hot runner (31) through which a molten first plastic material (2) can flow.

9. Device according to claim 8, **characterised in that** a needle valve element is provided, which is attributed to the further hot runner structure (33), wherein the needle valve (33) comprises a needle valve element (34) arranged to be movable, in between a first operating position in which an influx of molten first plastic material (2) from the at least one hot runner (31) into the at least one cold runner (19) is not possible and a second operating position in which an influx of molten first plastic material (2) from the at least one further hot runner (31) into the at least one cold runner (19) is possible.

10. Device according to claim 8 or claim 9, **characterised in that** the at least one further hot runner (31) of the further hot runner structure (31) can be connected or is connected in particular directly with at least one injection unit (16) providing the molten first plastic material (2).

11. Device according to one of the foregoing claims, **characterised in that** the hot runner structure (20) and, if applicable, also the further hot runner structure (32) are arranged or formed in a first tool element (10) of the injection mould tool (8).

12. Device according to one of the foregoing claims, **characterised in that** the at least hot runner (21) of the hot runner structure (20), if applicable, also the at least one further hot runner (31) of the further hot runner structure (32) are arranged or embodied, extending in an angular, in particular perpendicular manner relative to the at least one cold runner (19) in a hot runner section flowing into the at least one cold runner (19) at least in the closed position of the injection mould tool (8).

13. Device according to one of the foregoing claims, **characterised in that** the hot runner structure (20) comprising the at least one hot runner (21) through which the second plastic material (2) forming the core component of the plastic element to be manufactured can be connected or is connected in particular directly with at least one injection unit (16) providing the molten second plastic material (4).

14. Process for the manufacturing of a main component (3) formed by a first plastic material (2), and a plastic element comprising a core component (5) and formed by a second plastic material (4) which is surrounding the main component (3), claims **characterised in that** for the implementation of the process, a device (1) according to one of the foregoing claims is used.

## Revendications

1. Appareil (1) de fabrication d'une pièce de construction comprenant un composant de surface (3) constitué d'un premier matériau plastique (2) ainsi que d'un composant de cœur (5) constitué d'un second matériau plastique (4) entouré par le composant de surface (3), comprenant :
- un outil de moulage par injection (8) comprenant au moins deux éléments d'outil (9, 10), au moins une cavité d'outil (7) générant une forme étant ou pouvant être constituée au-dessus des au moins deux éléments d'outil (9, 10) dans une position fermée de l'outil de moulage par injection (8),
- une structure de canal froid (18) comprenant au moins un canal froid (19) pouvant être parcouru par un matériau plastique fondu (2, 4), débouchant dans la cavité d'outil (7) au moins en position fermée de l'outil de moulage par injection (8),
- une structure de canal chaud (20) comprenant au moins un canal chaud (21) pouvant être parcouru par un matériau plastique fondu (2, 4), en particulier par un second matériau fondu (4) destiné à fabriquer les composants de cœur (5) de la pièce de plastique à fabriquer, débouchant dans l'au moins un canal froid (19) au moins dans la position fermée de l'outil de moulage par injection (8),
- un dispositif de fermeture à aiguille affecté à la structure de canal chaud (20), le dispositif de fermeture à aiguille comprenant un élément de fermeture à aiguille (26) disposé de façon mobile entre une première position de fonctionnement, dans laquelle aucun débit entrant de matériau plastique fondu (4) n'est possible en provenance de l'au moins un canal chaud (21) dans l'au moins un canal froid (19), et une seconde position de fonctionnement, dans laquelle un débit entrant de matériau plastique fondu (4) est possible en provenance de l'au moins un canal chaud (21) dans l'au moins un canal froid (19),
**caractérisé en ce que** l'au moins un canal froid (19) s'étend entièrement le long d'un plan de séparation de l'outil de moulage par injection (8) par rapport à la cavité d'outil (7) jusqu'à la bordure de l'outil de moulage par injection (8).

2. Appareil selon la revendication 1, **caractérisé en ce que** l'élément de fermeture à aiguille (26) dépasse au moins partiellement dans l'au moins un canal froid dans la première position de fonctionnement, en particulier moyennant un angle, éventuellement verticalement, par rapport à un axe longitudinal du canal froid (19).

3. Appareil selon la revendication 1 ou 2, **caractérisé par** un dispositif de commande conçu pour commander des mouvements de l'élément de fermeture à aiguille (26), le dispositif de commande étant conçu pour créer des commandes de déplacement de l'élément de fermeture à aiguille (26) de la première position de fonctionnement à la seconde position de fonctionnement quand la cavité d'outil (7) est au moins partiellement remplie du premier matériau plastique (2).

4. Appareil selon l'une des revendications précédentes, **caractérisé en ce que** l'au moins un canal froid, en particulier dans une zone éloignée de la zone de débouché (28) dans la cavité d'outil (7), présente au moins une première et une seconde zones d'injection (29, 30).

5. Appareil selon la revendication 4, **caractérisé en ce qu'**au-dessus de l'au moins une première zone d'injection (29), on peut injecter au moins un premier matériau plastique fondu (2) formant les composants de surface (3) de la pièce de plastique à fabriquer dans le canal froid (19), et au-dessus de l'au moins une seconde zone d'injection (30), on peut injecter au moins un second matériau plastique fondu (4) formant les composants de cœur (5) de la pièce de plastique à fabriquer dans le canal froid (19).

6. Appareil selon la revendication 5, **caractérisé en ce que** l'au moins une première zone d'injection (29) est ou peut être liée, en particulier sans intermédiaire, avec au moins un organe d'injection (13) préparant le premier matériau plastique fondu (2).

7. Appareil selon l'une des revendications précédentes, **caractérisé par** un dispositif de blocage affecté à la structure de canal froid (20), qui comprend un élément de blocage (23) disposé de façon mobile entre une première position de fonctionnement, dans laquelle aucun écoulement du premier matériau plastique fondu (2) préparé via l'organe d'injection (13) n'est possible par le canal froid (19), et une seconde position de fonctionnement, dans laquelle un écoulement du premier matériau plastique fondu (2) préparé via l'organe d'injection (13) est possible par le canal froid (19).

8. Appareil selon l'une des revendications 5 à 7, **caractérisé en ce que** l'au moins une ou au moins une autre première zone d'injection (29) est ou peut être liée à au moins une autre structure de canal chaud (32) comprenant un canal chaud (31) pouvant être parcouru par un premier matériau plastique fondu (2).

9. Appareil selon la revendication 8, **caractérisé par** un dispositif de fermeture à aiguille affecté à l'autre structure de canal chaud (32), le dispositif de fermeture à aiguille (33) comprenant un élément de fermeture à aiguille (34) disposé de façon mobile entre une première position de fonctionnement, dans laquelle aucun débit entrant de matériau plastique fondu (2) n'est possible en provenance de l'au moins un autre canal chaud (31) dans l'au moins un canal froid (19), et une seconde position de fonctionnement, dans laquelle un débit entrant de matériau plastique fondu (2) est possible en provenance de l'au moins un autre canal chaud (31) dans l'au moins un canal froid (19).

10. Appareil selon l'une des revendications 8 ou 9, **caractérisé en ce que** l'au moins un autre canal chaud (31) de l'autre structure de canal chaud (32), est ou peut être liée, en particulier sans intermédiaire, avec au moins un organe d'injection (16) préparant le premier matériau plastique fondu (2).

11. Appareil selon l'une des revendications précédentes, **caractérisé en ce que** la structure de canal chaud (20), et éventuellement aussi l'autre structure de canal chaud (32), est disposée ou conçue dans un premier élément d'outil (10) de l'outil d'injection (8).

12. Appareil selon l'une des revendications précédentes, **caractérisé en ce que** l'au moins un canal chaud (21) de la structure de canal chaud (20), et éventuellement aussi l'au moins un canal chaud (31) de l'autre structure de canal chaud (32), sont conçus ou disposés inclinés, éventuellement verticalement, par rapport à l'au moins un canal froid (19), au moins dans une position de fermeture de l'outil d'injection (8), dans la section de canal chaud débouchant dans l'au moins un canal froid (19).

13. Appareil selon l'une des revendications précédentes, **caractérisé en ce que** la structure de canal chaud (20) comprenant le canal chaud (21) pouvant être parcouru par le second matériau plastique (4) formant les composants de cœur (5) de la pièce de plastique à fabriquer, est ou peut être liée, en particulier sans intermédiaire, avec au moins un second organe d'injection (16) préparant le second matériau plastique fondu (4).

14. Procédé de fabrication d'un composant de surface (3) constitué d'un premier matériau plastique (2) ainsi que d'un composant de cœur (5) recouvert du composant de surface (3), constitué d'un second matériau plastique (4), **caractérisé en ce qu'**on utilise un appareil (1) selon l'une des revendications précédentes pour réaliser le procédé.
